Europäisches Patentamt

European Patent Office

Office européen des brevets

(11) Publication number: **0 399 790**
**A2**

## EUROPEAN PATENT APPLICATION

(21) Application number: **90305558.0**

(51) Int. Cl.⁵: **H02G 3/04**

(22) Date of filing: **22.05.90**

(30) Priority: **23.05.89 GB 8911840**

(43) Date of publication of application:
**28.11.90 Bulletin 90/48**

(84) Designated Contracting States:
**AT BE CH DE DK ES FR GB GR IT LI LU NL SE**

(71) Applicant: **DATA TRAY SYSTEMS LTD**
**90/92 Tewin Road**
**Welwyn Garden City, Hertfordshire AL7**
**1BD(GB)**

(72) Inventor: **Conybeare, Nigel Paul**
**57 Wingate Road**
**Tring, Hertfordshire(GB)**
Inventor: **Conybeare, Alan David**
**23A Toms Lane**
**Kings Langley, Hertfordshire(GB)**

(74) Representative: **Tribe, Thomas Geoffrey et al**
**F.J. Cleveland & Company 40/42 Chancery**
**Lane**
**London WC2A 1JQ(GB)**

(54) **Cable carrier systems.**

(57) A cable carrier system for carrying electrical or optical cabling consisting of a longitudinal basket-work structure which is supported by connection via pairs of closely spaced longitudinal wires within the basket-work structure.

FIG. 1.

EP 0 399 790 A2

## CABLE CARRIER SYSTEMS

The present invention relates to cable carrier systems for carrying electrical or optical cabling.

In work areas where complex electrical equipment is used, the electrical or optical fibre cabling has to be channelled from place to place in a way which is both neat and structurally sound. The invention is concerned with solving the problem of providing such a system where the cabling can be carried by a structure which is easy to assemble and support.

Accordingly, the invention provides a cable carrier system for electrical or optical cabling in the form of a basket-like channel, comprising :
longitudinal and transverse carrier wires defining an open channel support for the cabling, of which the longitudinal carrier wires include at least one pair of closely spaced longitudinal carrier wires; and carrier supports for attachment to floor, wall or ceiling which are attached to and carry the channel by a screw fitment through the pair of closely spaced carrier wires.

Preferably there will be symmetrically disposed pairs of closely spaced longitudinal carrier wires. Generally the basket-like channel will have in cross-section a base and side walls. In a preferred arrangement two or more pairs of closely spaced longitudinal carrier wires are provided, one in each carrier wall in an upper region of said carrier wall. Two or more pairs of the longitudinal carrier wires can also be provided in the base of the channel.

These pairs of closely spaced carrier wires can have various forms of attachment connected to them. The channel can be supported as an under floor arrangement where the channel is carried on a transverse carrier member provided under the channel; or the channel support can be suspended in a ceiling or side wall arrangement. In each case, bolts of a size corresponding to the spacing of the longitudinal carrier wires pass through the pair of wires and are attached to a suitable fitment.

An embodiment of the invention will now be described by way of example with reference to the accompanying diagrammatic drawings in which :

Figure 1 is a perspective view of a ceiling-suspended system connected to a complex electronics units;

Figure 2 shows a suspended carrier system;

Figure 3 shows a sub-floor assembly carrying two channels;

Figure 4 shows a further form of suspended carrier system; and

Figures 5 and 6 are plan views of corner and T-junction modules; and

Figure 7 shows the mode of connection of the component parts.

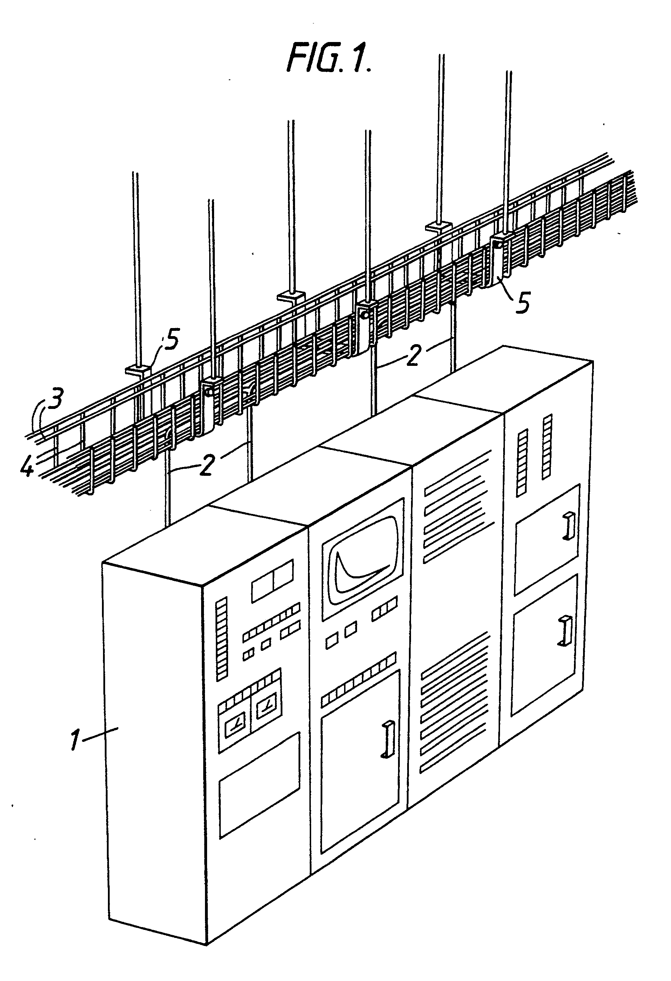

Referring to Figure 1, a console of electronics equipment (1) has bundles of optical fibre cabling (2) which are fed to a ceiling mounted cable carrier system in accordance with the invention. Longitudinal wires (3) and transverse wires (4) define an open mesh basket-like channel carrier which is supported by U brackets (5).

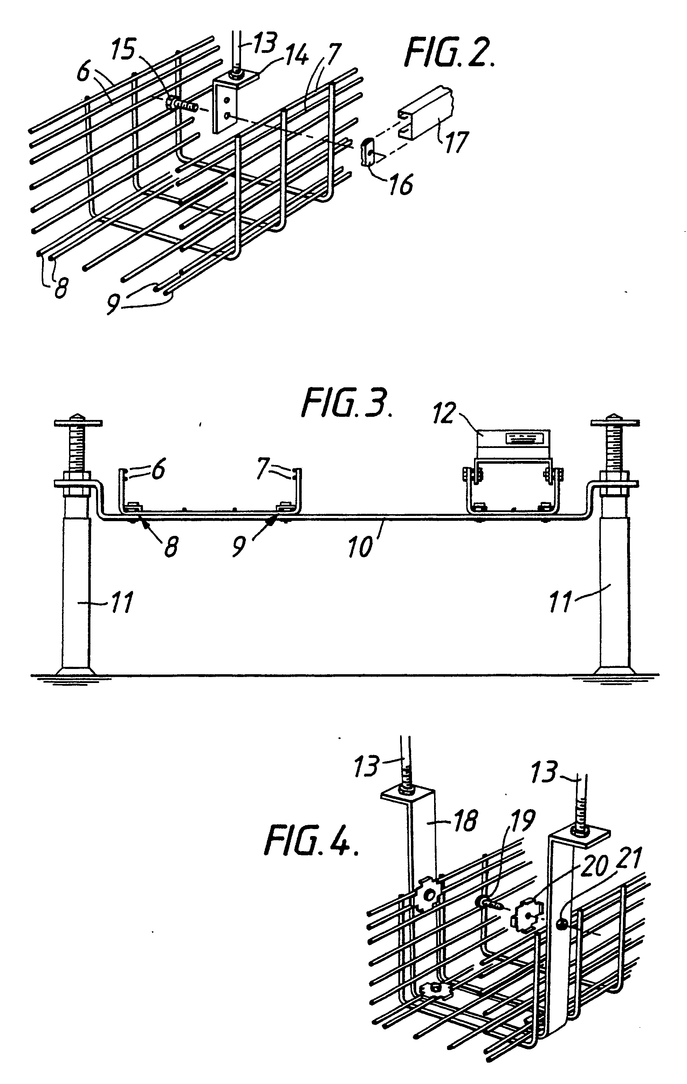

Referring now to Figures 2. 3 and 4, the method of attaching the carrier system to its carrier supports will be described.

Referring to Figure 2, two pairs of closely spaced longitudinal carrier wires (6) and (7) are provided in the upper regions of each side wall of the carrier system and two further pairs of closely spaced carrier wires (8) and (9) are provided in the base of the carrier system.

Referring to Figure 3, an open carrier system shown on the left is attached to the base with nuts and bolts passing through the pairs of carrier wires (8) and (9) and also through a transverse carrier member (10) attached to base supports (11).

Referring to the right-hand side of Figure 3, a smaller carrier support system is shown which is attached to the transverse support (10) in the same way, and the pairs of longitudinal wires (6) and (7) are brought into use to carry a data take off box (12).

Referring back to Figure 2, a drop rod (13) and angle bracket (14) are attached to the pairs of closely spaced wires (7) via a bolt (15), and a threaded and slotted T-piece (16) which fits within a horizontal support channel (17).

Figure 4 shows another suspended support system in which a U bracket (18) is suspended from two drop rods (13). This is attached to the carrier wires from bolts (19), star clamps (20) and nuts (21). In this form, which can accommodate heavier cabling, the carrier system is attached at four points through the four pairs of wires.

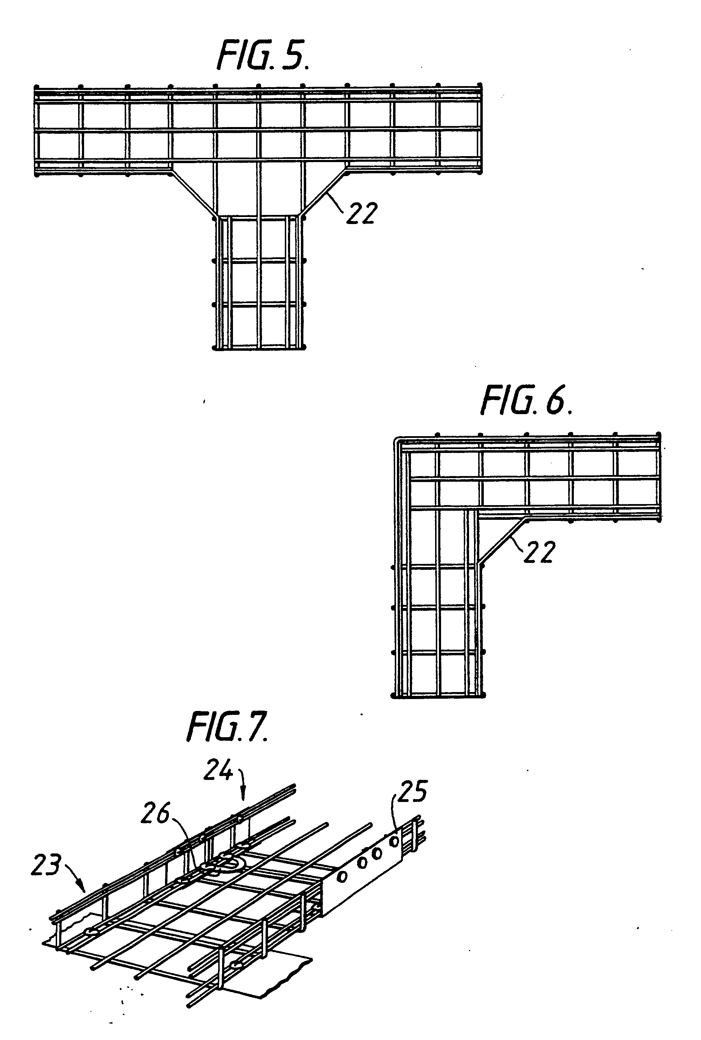

Referring now to Figures 5 and 6, these show component parts of the channel carrier system defining a T-junction and a right-angled bend. In each case, a particular feature is that at the corner the edge is bevelled at the point (22) to enable the cable to go round the right-angle bend without too great a degree of bending stress on the cable .

Figures 7 shows how the separate components are connected together. This method of coupling can be used for the angle components shown in Figures 5 and 6 and also for linear lengths of the carrier system. What happens is that two separate components (23 and 24) are abutted, and connected together by a U-shaped connecting piece (25) and panhead bolts (25) with washers and nuts. Generally on each side of the upper side pairs of close-spaced wires there will be four such bolts and a further four bolts on each side of the base section of the channel. An earthing bond (26) is also provided.

## Claims

1. A cable carrier system for electrical or optical cabling which is in the form of a basket-like channel characterised in that the basket-like channel is defined by longitudinal wires (3) and transverse carrier wires (4) of which the longitudinal carrier wires include at least one pair of closely spaced carrier wires (6) and (7) or (8) and (9); and that carrier supports (10), (18) or (14) for attachment to floor, wall or ceiling are attached to and carry the channel by means of a screw fitment through the pair of closely spaced carrier wires.

2. A cable carrier system according to claim 1 in which the channel has a base and a symmetrical side walls and is characterised in that symetrically disposed closely spaced longitudinally carrier wires are disposed in an upper region of each side wall.

3. A cable carrier system according to claim 1 or claim 2 in which at least two pairs of closely spaced longitudinal wires are provided in the base of the channel.

# FIG.1.

*FIG.2.*

*FIG.3.*

*FIG.4.*

## FIG. 5.

22

## FIG. 6.

22

## FIG. 7.

24

26

23

25